## Europäisches Patentamt
## European Patent Office
## Office européen des brevets

(19)

(11) Veröffentlichungsnummer: **0 244 449**
**B1**

(12)

# EUROPÄISCHE PATENTSCHRIFT

(45) Veröffentlichungstag der Patentschrift:
07.03.90

(51) Int. Cl.⁵ : **B 62 D 5/093**, B 62 D 5/00

(21) Anmeldenummer: 86906305.7

(22) Anmeldetag: 08.10.86

(86) Internationale Anmeldenummer:
PCT/EP 86/00577

(87) Internationale Veröffentlichungsnummer:
WO/8702318 (23.04.87 Gazette 87/09)

(54) ZENTRIEREINRICHTUNG FÜR ZWEI GEGENEINANDER VERDREHBARE TEILE AUFWEISENDE AGGREGATE.

(30) Priorität : 21.10.85 PCT/EP85/00552

(43) Veröffentlichungstag der Anmeldung :
11.11.87 Patentblatt 87/46

(45) Bekanntmachung des Hinweises auf die Patenterteilung : 07.03.90 Patentblatt 90/10

(84) Benannte Vertragsstaaten :
DE FR GB IT

(56) Entgegenhaltungen :
DE--A-- 2 913 484
FR--A-- 1 205 624
FR--A-- 2 388 709
US--A-- 4 279 323
US--A--29 063 61

(73) Patentinhaber : ZAHNRADFABRIK FRIEDRICHSHA-
FEN AKTIENGESELLSCHAFT
Löwentaler Strasse 100 Postfach 2520
D-7990 Friedrichshafen 1 (DE)

(72) Erfinder : BREITWEG, Werner
Lauchhofstrasse 7
D-7070 Schwäbisch Gmünd (DE)

(74) Vertreter : Raue, Reimund
Zahnradfabrik Friedrichshafen AG Löwentaler
Strasse 100 Postfach 2520
D-7990 Friedrichshafen 1 (DE)

## Beschreibung

Die Erfindung betrifft eine Zentriereinrichtung für Aggregate, die zwei gegeneinander verdrehbare Teile aufweisen, insbesondere für Lenkventile von Hilfskraftlenkungen für Kraftfahrzeuge, nach dem Oberbegriff des Anspruches 1.

Eine derartige Zentriereinrichtung läßt sich vorteilhaft auf Lenkventile in Drehschieberbauweise oder in Drehkolbenbauweise anwenden. Derartige Anwendungen sind in der EP-A1-0 032 345 enthalten. Durch die Drehstabfeder ist es möglich, die Zentriereinrichtung mit einer bestimmten Kennlinie auszustatten. Dies bedeutet, daß einem bestimmten Verdrehwinkel der beiden gegeneinander verdrehbaren Teile des Aggregates eine bestimmte Rückstellkraft zugeordnet wird. Entsprechend der Charakteristik einer Drehstabfeder ist eine genau bestimmte Mittelzentrierung mit einer bis in die Mittelstellung reichenden Zentrierkraft nicht erreichbar.

Aus der DE-A-2 913 484 ist eine Hilfskraftlenkung bekannt, die zusätzlich zu einer Drehstabfeder eine hydraulische Rückwirkungseinrichtung und eine mechanische Mittenzentriereinrichtung aufweist.

Durch die Parallelschaltung einer Drehstabfeder mit einer mechanischen Mittenzentriereinrichtung werden die Vorteile der großen Zentrierkräfte einer Drehstabfeder in größeren Auslenkbereichen und die exakt zu bestimmenden Zentrierkräfte einer Mittenzentriereinrichtung für kleine Verdrehwinkel miteinander vereinigt. Beim Anwendungsfall in einem Lenkventil einer Hilfskraftlenkung ergibt sich ein besseres Fahrgefühl als bei einem Lenkventil mit nur einer Drehstabfeder.

Die Drehstabfeder und die mechanische Mittenzentriereinrichtung sind in folgender Weise in axialer Richtung hintereinander angeordnet: Zwei V-förmige Schrägflächen mit einer dazwischenliegenden Kugelreihe ; die Drehstabfeder ; Führungskugeln, die eine leichte Axialverschiebbarkeit ermöglichen, eine Verdrehung der Drehstabfeder jedoch verhindern ; eine Zentrierfeder in der Form einer Schraubendruckfeder. Diese Hintereinanderschaltung in axialer Richtung ergibt gegenüber einer Zentriereinrichtung, die nur eine Drehstabfeder aufweist, eine starke Vergrößerung der Baulänge.

Der Erfindung liegt die Aufgabe zugrunde, eine Zentriereinrichtung mit einer Drehstabfeder zu schaffen, mit der ohne erhöhten Raumbedarf in axialer Richtung eine exakte Mitteneinstellung durch eine genau festlegbare Zentrierkraft möglich ist.

Diese Aufgabe wird erfindungsgemäß durch die in Anspruch 1 gekennzeichnete Zentriereinrichtung gelöst. Vorteilhafte und zweckmäßige Ausgestaltungen sind in den Unteransprüchen angegeben.

Der torsionssteife Metallfaltenbalg mit axialer Federwirkung umgibt die Drehstabfeder in ihrem Torsionsbereich. Dadurch sind die beiden Teile der Zentriereinrichtung in axialer Richtung parallel zueinander bzw. koaxial zueinander angeordnet. Die Länge der Zentriereinrichtung wird allein bestimmt durch die erforderliche Länge der Drehstabfeder. Gegenüber der DE-A-2 913 484 ergibt sich außerdem der Vorteil, daß die Zentrierfeder und die Verdrehsicherung in einem einzigen Bauteil zusammengefaßt ist. Dadurch ergibt sich eine Reduzierung der Einzelteile sowie eine Vereinfachung bei der Herstellung und der Montage der Teile.

Die V-förmigen Vertiefungen der Mittelstellungsrasteinrichtung lassen sich sehr leicht herstellen. Durch die Zwischenschaltung von Wälzkörpern zwischen die beiden Zentrierstücke der Mittelstellungsrasteinrichtung erfolgt eine reibungsfreie und dadurch exakte Mittenzentrierung.

Ein weiterer Vorteil der Zentriereinrichtung liegt darin, daß die Drehstabfeder von dem Metallfaltenbalg und den Verbindungsteilen umschlossen und dadurch während der Lagerhaltung und der Montage vor äußeren Beschädigungen geschützt ist.

Die Erfindung wird im folgenden anhand eines in einer Zeichnung dargestellten Ausführungsbeispieles näher erläutert. Es zeigt

Fig. 1 einen Längsschnitt durch die erfindungsgemäße Zentriereinrichtung,

Fig. 2 eine Teilansicht auf die Mittelstellungsrasteinrichtung entsprechend dem Pfeil II in Fig. 1.

Die Zentriereinrichtung weist eine Drehstabfeder 1 auf, die in ihrem mittleren Torsionsbereich 2 einen reduzierten Querschnitt aufweist. An den Enden der Torsionsstabfeder 1 sind Stützbereiche 3 und 4 mit größerem Durchmesser vorgesehen. Die Stützbereiche 3 und 4 sind auf ihrer zylindrischen Außenfläche profiliert. Auf diese Außenfläche ist jeweils ein Verbindungsteil 5 und 6 aufgeschoben. Eine feste Verbindung zwischen den Verbindungsteilen 5 und 6 und den profilierten Stützbereichen 3 und 4 kann beispielsweise durch Rundkneten, Hämmern oder dergleichen erfolgen. Eine jeweils an der Außenfläche der Stützbereiche 3 und 4 angebrachte ringförmige Nut 7 bzw. 8 dient dazu, die Verbindungsteile 5 und 6 zusätzlich gegen axiale Verschiebung auf der Drehstabfeder 1 zu sichern.

Die axial außen liegenden Bereiche der Verbindungsteile 5 und 6 dienen zur Verbindung der Zentriereinrichtung mit zwei nicht dargestellten, gegeneinander verdrehbaren Teilen eines Aggregats. Dies können beispielsweise die Steuerbüchse und der Drehschieber eines Drehschieberventils oder die Eingangslenkspindel und die Abtriebswelle eines Drehkolbenventiles sein.

Die Verbindungsteile 5 und 6 weisen axial nach innen, d. h. in Richtung auf den Torsionsbereich 2 der Drehstabfeder 1 gerichtete, hülsenförmige Fortsätze 9 und 10 auf, die die Drehstabfeder 1 berührungsfrei umgeben.

An dem freien Ende des einen hülsenförmigen Fortsatzes 9 des Verbindungsteiles 5 ist ein torsionssteifer Metallfaltenbalg 11 mit axialer Federwirkung befestigt. Der Metallfaltenbalg 11 umgibt die Drehstabfeder 1 in ihrem Torsionsbereich 2. Das andere Ende des Metallfaltenbalges 11 trägt ein erstes Zentrierstück 12 einer Mittelstellungsrasteinrichtung 13. Ein zweites Zentrierstück 14 der Mittelstellungsrasteinrichtung 13 ist mit dem freien Ende des hülsenförmigen Fortsatzes 10 des Verbindungsteiles 6 verbunden.

Die Mittelstellenrasteinrichtung 13 ist an ihren beiden Zentrierstücken 12 und 14 mit Vertiefungen 15 bzw. 16 ausgestattet, die in einem in Umfangsrichtung liegenden Schnitt einen im wesentlichen V-förmigen Querschnitt aufweisen. Zweckmäßigerweise sind am Umfang der Zentrierstücke 12 und 14 zwei oder mehrere dieser Vertiefungen 15 und 16 angeordnet. Zur Verringerung der Reibung der Mittelstellungsrasteinrichtung 13 sind zwischen den Vertiefungen 15 und 16 Wälzkörper 17 eingebettet, die zweckmäßigerweise in einem Käfig 18 geführt sind.

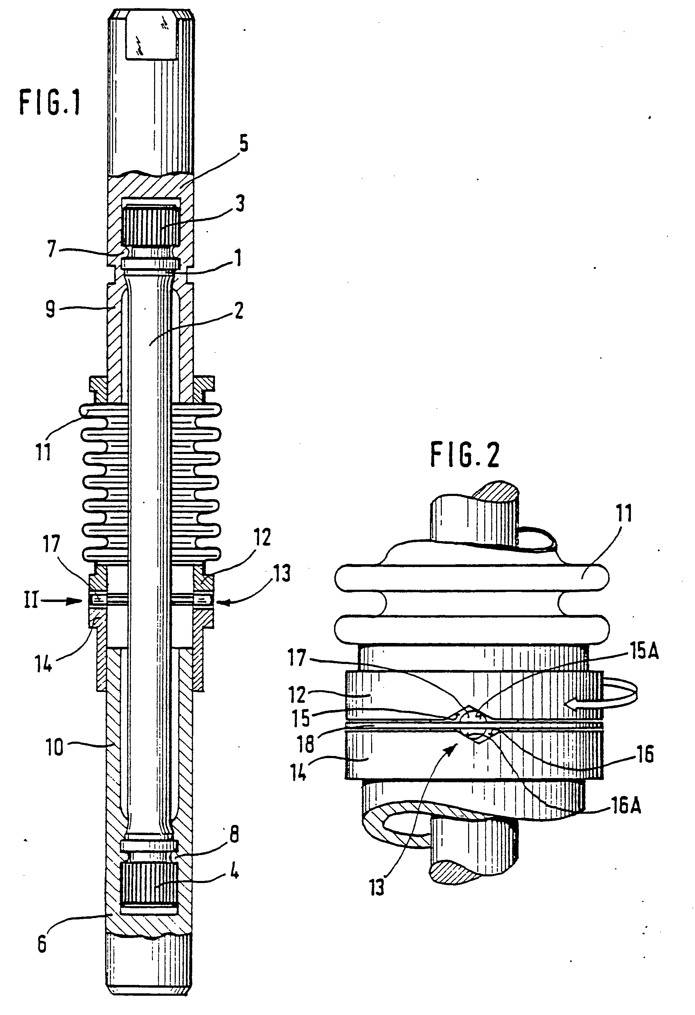

Bei einer Verdrehung der Verbindungsteile 5 und 6 gegeneinander werden auch die Vertiefungen 15 und 16 gegeneinander verdreht. Dabei bewegen sich die einander gegenüberliegenden schrägen Zentrierflächen 15A und 16A der Vertiefungen 15 bzw. 16 in Umfangsrichtung der Zentrierstücke 12 und 14 aufeinander zu. Gleichzeitig werden die schrägen Zentrierflächen 15A und 16A in axialer Richtung durch die Wälzkörper 17 auseinandergedrückt, wie dies in Fig. 2 dargestellt ist. Die axiale Relativverschiebung der schrägen Zentrierflächen 15A und 16A bewirkt ein Zusammendrücken des Metallfaltenbalges 11 und eine daraus resultierende Axialkraft zwischen den schrägen Zentrierflächen 15A, 16A und den Wälzkörpern 17. Über die schrägen Zentrierflächen 15A und 16A wird die axiale Rückstellkraft in eine Zentrierkraft umgewandelt, die in Umfangsrichtung der beiden Zentrierstücke wirkt.

Bezugszeichen

   1 Drehstabfeder
   2 Torsionsbereich
   3 Stützbereich
   4 Stützbereich
   5 Verbindungsteil
   6 Verbindungsteil
   7 Nut
   8 Nut
   9 hülsenförmiger Fortsatz
  10 hülsenförmiger Fortsatz
  11 Metallfaltenbalg
  12 Zentrierstück
  13 Mittelstellungsrasteinrichtung
  14 Zentrierstück
  15 Vertiefung
  15A schräge Zentrierfläche
  16 Vertiefung
  16A schräge Zentrierfläche
  17 Wälzkörper
  18 Käfig

Patentansprüche

1. Zentriereinrichtung für zwei gegeneinander verdrehbare Teile aufweisende Aggregate, insbesondere für Lenkventile von Hilfskraftlenkungen für Kraftfahrzeuge,
mit einer Drehstabfeder (1), deren mittlerer Torsionsbereich (2) einen reduzierten Querschnitt aufweist und an deren Enden Stützbereiche (3, 4) vorgesehen sind,
mit an den Stützbereichen (3, 4) festgelegten Verbindungsteilen (5, 6) für die Verbindung der Zentriereinrichtung mit den beiden Teilen des Aggregates,
wobei die Verbindungsteile (5, 6) nach innen in Richtung auf den Torsionsbereich (2) die Drehstabfeder (1) berührungsfrei umgebende, hülsenförmige Fortsätze (9, 10) aufweisen,
dadurch gekennzeichnet,
daß ein torsionssteifer Metallfaltenbalg (11) mit axialer Federwirkung im Bereich zwischen den beiden hülsenförmigen Fortsätzen (9, 10) die Drehstabfeder (1) in ihrem Torsionsbereich (2) umgebend angeordnet ist,
daß der Metallfaltenbalg (11) an seinem einen Ende mit einem der Verbindungsteile (5) verbunden ist,
daß der Metallfaltenbalg (11) an seinem anderen Ende mit einem ersten Zentrierstück (12) einer Mittelstellungsrasteinrichtung (13) verbunden ist und
daß ein zweites Zentrierstück (14) der Mittelstellungsrasteinrichtung (13) mit dem anderen der Verbindungsteile (10) verbunden ist.

2. Zentriereinrichtung nach Anspruch 1, dadurch gekennzeichnet,
daß die beiden Zentrierstücke (12, 14) der Mittelstellungsrasteinrichtung (13) Vertiefungen (15, 16) von in Umfangsrichtung der Zentrierstücke (12, 14) im wesentlichen V-förmigem Querschnitt aufweisen und
daß zwischen den Vertiefungen (15, 16) Wälzkörper (17) angeordnet sind.

3. Zentriereinrichtung nach Anspruch 1, dadurch gekennzeichnet, daß die Verbindungen zwischen dem Metallfaltenbalg (11) und dem hülsenförmigen Fortsatz (9) des einen Verbindungsteiles (5) bzw. dem ersten Zentrierstück (12) und zwischen dem zweiten Zentrierstück (14) und dem hülsenförmigen Fortsatz (10) des anderen Verbindungsteiles (6) durch Punktschweißen erfolgen.

Claims

1. A centring device for two units comprising parts rotatable relative to one another, more particularly for steering valves in power-assisted steering systems for motor vehicles, comprising
a torsion-bar spring (1) having a reduced cross-section in its central torsion area (2) and having supporting areas (3, 4) at its ends, and
connecting parts (5, 6) secured to the supporting areas (3, 4) for connecting the centring device to the two parts of the unit,

the connecting parts (5; 6) having sleeve-like projections (9, 10) extending inwards towards the torsion area (2) and surrounding the torsion-bar spring (1) without contact, characterised in that

a torsion-resistant metal bellows (11) having an axial spring effect is disposed in the area between the two sleeve-like projections (9, 10) and surrounding the torsion area (2) of the torsion-bar spring (1)

one end of the metal bellows (11) is connected to one of the connecting parts (5),

the other end of the metal bellows (11) is connected to a first centring member (12) of a central-position locking device (13), and

a second centring member (14) of the central-position locking device (13) is connected to the other connecting part (10).

2. A centring device according to claim 1, characterised in that

the two centring members (12, 14) of the central-position locking device (13) have recesses (15, 16) in the peripheral direction of the centring members (12, 14) and having a substantially V-shaped cross section and

roller members (17) are disposed between the recesses (15, 16).

3. A centring device according to claim 1, characterised in that the connections between the metal bellows (11) and the first centring member (12) or the sleeve-like projection (9) of the first connecting part (5), and between the second centring member (14) and the sleeve-like projection (10) of the other connecting part (6), are made by spot welding.

## Revendications

1. Dispositif de centrage pour des ensembles comportant deux éléments tournant dans des sens opposés, notamment pour des soupapes de directions assistées pour véhicules automobiles, comportant une barre de torsion (1) dont la zone centrale de torsion (2) a une section transversale réduite et aux extrémités de laquelle sont prévues des zones de fixation (3, 4),

et comportant des éléments de raccordement (5, 6) fixés aux zones de fixation (3, 4) pour raccorder le dispositif de centrage aux deux éléments de l'ensemble,

et dans lequel les éléments de raccordement (5, 6) comportent des appendices tubulaires (9, 10) dirigés du côté intérieur, en direction de la zone de torsion (2), et entourant la barre de torsion (1) sans la toucher, caractérisé en ce que

un manchon métallique à soufflet (11) rigide en torsion et élastique axialement est disposé entre les deux appendices tubulaires (9, 10) et entoure la barre de torsion (1) dans sa zone de torsion (2),

l'une des extrémités du manchon à soufflet (11) est fixée à un premier (5) des éléments de raccordement,

l'autre extrémité du manchon à soufflet (11) est fixée à une première pièce de centrage (12) faisant partie d'un dispositif (13) d'encliquetage en position médiane, et

une seconde pièce de centrage (14) du dispositif d'encliquetage (13) est fixée à l'autre élément de raccordement (10).

2. Dispositif de centrage selon la revendication 1, caractérisé en ce que :

les deux pièces de centrage (12, 14) du dispositif d'encliquetage (13) comportent des encoches (15, 16) à profil sensiblement en V dans la direction circonférentielle des pièces de centrage (12, 14), et

des rouleaux (17) sont disposés entre les encoches (15, 16).

3. Dispositif selon la revendication 1, caractérisé en ce que les fixations entre le manchon métallique à soufflet (11) et l'appendice tubulaire (9) du premier élément de raccordement (5) d'une part, et d'autre part la première pièce de centrage (12), ainsi qu'entre la seconde pièce de centrage (14) et l'appendice tubulaire (10) de l'autre élément de raccordement (6), sont réalisées par soudage par points.

FIG.1

FIG.2